# EUROPÄISCHE PATENTANMELDUNG

(11) **EP 2 407 297 A1**
(43) Veröffentlichungstag der Anmeldung: **18.01.2012**
(21) Anmeldenummer: 11174294.6
(22) Anmeldetag: 15.07.2011
(51) Int. Cl.: B29C 47/88, B29C 47/08, B29C 47/92

(54) **Verfahren und Vorrichtung zum Reinigen der Kühlluft bei der Extrusion von Kunststoffteilen**

(30) Priorität: 15.07.2010 DE 102010031424
(71) Anmelder: battenfeld-cincinnati Germany GmbH, 32547 Bad Oeynhausen (DE)
(72) Erfinder: Dohmann, Heinrich, 37671 Höxter (DE); Stieglitz, Henning, 32425 Minden (DE)

(57) **Zusammenfassung**

Die Erfindung betrifft ein Verfahren und Vorrichtung zum Reinigen der bei der Extrusion von Kunststoffprofilen verwendete Luft zum Kühlen des Kunststoffprofils (9), wobei die Luft an der Stirnseite des abgetrennten Profiles angesaugt wird und zur Kühlung des Innenbereiches des Profile gegen die Extrusionsrichtung (11) bis zum Extrusionswerkzeug (2) mittels einer Saugvorrichtung (8) angesaugt und über einen Luftaustritt wieder an die Umgebung abgegeben wird.

Erfindungsgemäß ist dabei vorgesehen, dass die angesaugte Luft vor der Abgabe an die Umgebung einen Elektrofilter (7) durchläuft in dem Schmutzpartikel polarisiert werden, die polarisierten Schmutzpartikel durch gegenpolarisierte Platten angezogen werden und somit gereinigte Luft an die Umgebung abgegeben wird.

## Beschreibung

Die Erfindung betrifft eine Verfahren zum Reinigen der bei der Extrusion von Kunststoffprofilen verwendete Luft zum Kühlen des Kunststoffprofils, wobei die Luft an der Stirnseite des abgetrennten Profiles angesaugt wird und zur Kühlung des Innenbereiches des Profile gegen die Extrusionsrichtung bis zum Extrusionswerkzeug mittels einer Saugvorrichtung angesaugt und über einen Luftaustritt wieder an die Umgebung abgegeben wird, sowie eine dazugehörige Vorrichtung.

Zur effektiveren Kühlung der Kunststoffprofile in der Extrusionstechnik, insbesondere bei der Rohrextrusion, wird immer verstärkter die zusätzliche Innenkühlung eingesetzt. Im Stand der Technik sind hier unterschiedlichen Verfahren bekannt. Neben der Innensprühtechnik, wo ein Wassernebel im Rohr versprüht wird, kommt auch durchströmen des Profils mit angesagter Luft im Gegenstromprinzip zum Einsatz.

Bei dem Durchströmen im Gegenstromprinzip wird kühlerer Außenluft durch das Wärme Profil gesaugt oder geblasen. Da Kunststoffe beim Abkühlen flüchtige Bestandteile wie Weichmacher, Wachse oder sonstige Additive abgeben, werden diese von der durchströmenden Luft aufgenommen und abtransportiert. Derartig kontaminierte Luft kann Bauteil verschmutzen oder beschädigen, außerdem ist eine derartig höhere Konzentration in der Luft nicht unbedingt gesundheitsfördernd. Zum Beispiel kann die kontaminierte Luft bei der Vorwärmung von Granulat zu einer nachteiligen Belagbildung auf dem Granulat führen.

Bekannte Filtersysteme, wie Schwerkraftabscheider filtern die auftretenden Partikel nicht aus oder Feststofffilter setzen sich zu schnell mit den ausgeschieden Wachsen zu und sind daher ungeeignet.

Die **Aufgabe** der Erfindung ist es nun ein Verfahren sowie eine Anlagenanordnung vorzuschlagen mit der innerhalb des Extrusionsprozesses die effektivere Kühlung eingesetzt werden kann ohne mit der kontaminierten Luft Bauteile/Produkte zu verschmutzen oder zu beschädigen, bzw. die Umwelt zu belasten.

Die **Lösung** der Aufgabe ist in Verbindung mit dem Oberbegriff des Anspruchs 1 dadurch gekennzeichnet, das die angesaugte Luft vor der Abgabe an die Umgebung einen Elektrofilter durchläuft in dem Schmutzpartikel polarisiert werden, die polarisierten Schmutzpartikel durch gegenpolarisierte Platten angezogen werden und somit gereinigte Luft an die Umgebung abgegeben wird.

Weiterbildungsgemäß ist vorgesehen dass die Luft vor Abgabe an die Umgebung zur Energieübertragung genutzt wird. Dies kann zum Beispiel die Erwärmung vom Maschinenhallen oder die Trocknung von Kunststoffgranulat oder Holzschnitzel sein, also jede Art von Energieübertragung bei die warme Luft aus dem Extrusionsprozess zur Einsparung von Energie genutzt werden kann.

In einer weiteren Fortbildung ist vorgesehen, dass die Energieübertragung zur Vorwärmung von aufzuschmelzendem Granulat für den Extrusionsprozess genutzt wird, wobei die aus dem Luftaustritt austretende Luft das Granulat zur Energieübertragung umströmt. Dadurch kann die erforderliche Aufschmelzenergie im Extruder erheblich herabgesetzt werden.

Um die Temperatur des Granulates zu beeinflussen ist weiterhin vorgesehen, dass in Abhängigkeit der Zieltemperatur des aufzuschmelzenden Granulates, hiermit ist die maximale Temperatur gemeint, die das Granulat haben kann um noch rieselfähig zu bleiben ohne zu kleben, und der Temperatur der Luft am Luftaustritt solange kühlere Fremdluft beigemischt wird, bis die Zieltemperatur des aufzuschmelzenden Granulates erreicht ist. Die kann zum Beispiel mit Hilfe eines steuer- und/oder regelbaren Bypassventils vorgenommen werden, wodurch die Luft vor Abgabe an das Granulat auf die gewünschte Temperatur gebracht wird.

Alternativ ist vorgesehen, dass die aus dem Luftaustritt austretende Luft das Granulat zur Energieübertragung solange umströmt bis die Zieltemperatur des aufzuschmelzenden Granulates erreicht ist.

Selbstverständlich ist das Verfahren nicht nur für die Vorwärmung von Granulat geeignet. Es ist genauso denkbar, die Luft in einen Wärmetauscher zu leiten und Räume aufzuheizen oder da sie gereinigt ist direkt den Räumen zuzuführen. Ebenso können mit dem Verfahren Holzschnitzel getrocknet werden. Schlicht weg, die gereinigte warme Luft ist dazu geeignet vielseitig eingesetzt zu werden.

Die Aufgabe bezüglich der Anlagenanordnung ist dadurch **gelöst** dass eine Extrusionslinie, umfassend mindestens einen Extruder, ein Extrusionswerkzeug, eine Kalibrier- und Kühleinrichtung und eine Trennvorrichtung, wobei zum Kühlen des Kunststoffprofils eine Saugvorrichtung vorgesehen ist, die über Saugleitungen mit der Extrusionslinie verbunden ist, wobei in der Saugleitung zwischen der Saugvorrichtung und der Extrusionslinie ein Elektrofilter angeordnet ist, vorgeschlagen wird.

Hierdurch wird sichergestellt. dass die Saugvorrichtung, z. B. eine eingesetzter Ventilator, bereits mit der gereinigten Luft durchströmt wird und somit nicht kontaminiert werden kann.

In der Zeichnung ist schematisch ein Ausführungsbeispiel der Erfindung wiedergegeben. Es zeigt:
- Fig. 1: eine schematische Übersicht einer Extrusionslinie
- Fig. 2: ein Draufsicht der Linie gemäß Figur 1 und
- Fig. 3: eine Vergrößerte Darstellung aus Figur 2

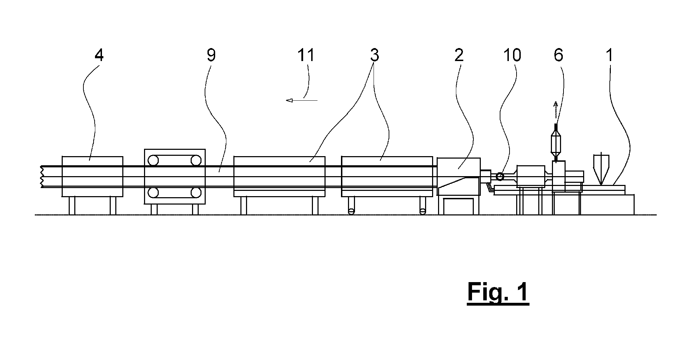

In der Figur 1 ist schematisch der Aufbau der erfindungsgemäßen Extrusionslinie wiedergegeben. In einem Extruder 1 wird zugeführtes Kunststoffgranulat aufgeschmolzen und kontinuierlich mittels eines Extrusionswerkzeuges 2 zu einem Kunststoffprofil 9 geformt. In einer Kalibrier- und Kühleinrichtung 3 wird das Kunststoffprofil 9 auf Endmaß kalibriert und solange gekühlt bis es formstabil ist. Anschließend wird es in einer Trennvorrichtung 4 auf handelsübliche Längen abgelängt.

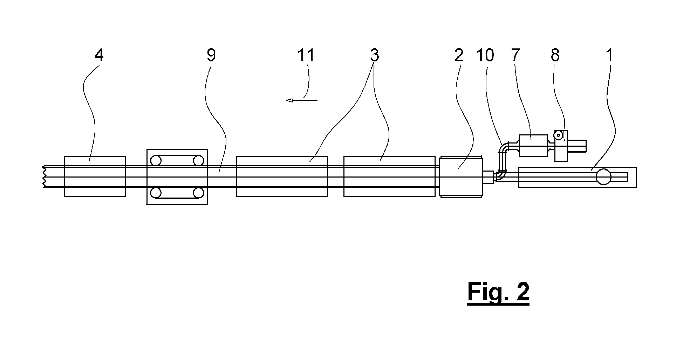

Um die Kühlstrecke und damit auch die Kühlzeit und die Gesamtlänge der Linie zu verringern, wird mit Hilfe der Saugvorrichtung 8 (nur in Figur 2 zu sehen, da seitlich angeordnet) an der Stirnseite des abgetrennten Kunststoffprofiles 9, also hinter der Trennvorrichtung 4, Außenluft angesaugt und entgegen der Extrusionsrichtung 11 bis durch das Werkzeug 2 durch das Innere des Kunststoffprofiles 9 geleitet. Hierbei erwärmt sich die Luft und kühlt in Folge das Profil von Innen. Beim Durchströmen des Kunststoffprofils 9 nimmt die Luft Schmutzpartikel wie Staub, aber auch vor allem Wachse, Weichmacher und sonstige Additive vom Kunststoff auf, die einerseits die Luft kontaminieren und andererseits Bauteile beschädigen. Um die so verschmutzte Luft vor Abgabe an die Umgebung am Luftaustritt 6 wieder zu reinigen, ist vorgesehen sie durch einen Elektrofilter 7 zu leiten. In diesem Elektrofilter werden die in der Luft enthaltenen Partikel polarisiert und somit mit einer Ladung versehen. Im Filter selbst sind Blechplatten angeordnet die ebenfalls polarisiert, jedoch mit einer gegengleichen Ladung versehen sind. Durch diese gegengleichen Ladungen werden die polarisierten Schutzpartikel angezogen und somit aus der Luft entfernt. Die Blechplatten können problemlos entnommen und somit ausgetauscht, oder gereinigt werden.

Auf diese Weisen wird die für die Innenkühlung des Kunststoffprofils angesaugte Luft erst nach der Reinigung wieder an die Umgebung abgegeben, weiterverwendet oder durch Bauteile der Anlage geführt.

Selbstverständlich kann die Luft nicht nur zum Vorwärmen von Granulat verwendet werden, Einsatzmöglichkeiten finden sich auch zum Heizen angrenzender Betriebsräume oder in Verbindung mit einem Wärmetauscher und weiteren Komponenten zur Energierückgewinnung.

Figur 2 zeig die gleiche Anordnung wie Figur 1 und es werden für gleiche Bauteile auch wieder gleiche Bezugsziffern verwendet. Zwischen dem Werkzeug 2 und dem Extruder 1 ist ein Verbindungsrohr 10 angeordnet, welches die durch die Saugvorrichtung, hier ein Ventilator, angesaugt Luft dem Elektrofilter 7 zuführt. Die Luft wird dann gereinigt über den Luftaustritt 6 ausgegeben.

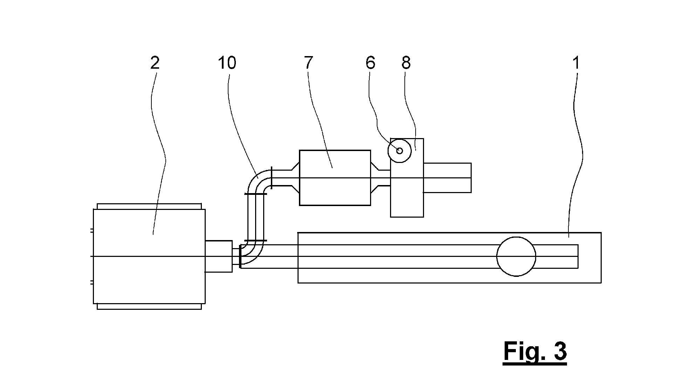

Figur 3 zeigt diesen Bereich in einer vergrößerten Darstellung.

### Bezugszeichenliste:

- 1: Extruder
- 2: Extrusionswerkzeug
- 3: Kalibrier- und Kühleinrichtung
- 4: Trennvorrichtung
- 6: Luftaustritt
- 7: Elektrofilter
- 8: Saugvorrichtung
- 9: Kunststoffprofil
- 10: Verbindungsrohr
- 11: Extrusionsrichtung

- T_{L}: Lufttemperatur an 6
- T_{z}: Zieltemperatur

## Patentansprüche

1. Verfahren zum Reinigen der bei der Extrusion von Kunststoffprofilen verwendete Luft zum Kühlen des Kunststoffprofils (9), wobei die Luft an der Stirnseite des abgetrennten Profiles angesaugt wird und zur Kühlung des Innenbereiches des Profile gegen die Extrusionsrichtung (14) bis zum Extrusionswerkzeug (2) mittels einer Saugvorrichtung (8) angesaugt und
über einen Luftaustritt (6) wieder an die Umgebung abgegeben wird,
**dadurch gekennzeichnet, dass**
die angesaugte Luft vor der Abgabe an die Umgebung einen Elektrofilter (7) durchläuft in dem Schmutzpartikel polarisiert werden,
die polarisierten Schmutzpartikel durch gegenpolarisierte Platten angezogen werden und
somit gereinigte Luft an die Umgebung abgegeben wird.

2. Verfahren nach Anspruch 1, **dadurch gekennzeichnet, dass** die Luft vor Abgabe an die Umgebung zur Energieübertragung genutzt wird.

3. Verfahren nach Anspruch 2, **dadurch gekennzeichnet, dass** die Energieübertragung zur Vorwärmung von aufzuschmelzendem Granulat für den Extrusionsprozess genutzt wird, wobei die aus dem Luftaustritt (6) austretende Luft das Granulat zur Energieübertragung umströmt.

4. Verfahren nach Anspruch 3, **dadurch gekennzeichnet, dass** in Abhängigkeit der Zieltemperatur T_{z} des aufzuschmelzenden Granulates und der Temperatur T_{L} der Luft am Luftaustritt (6) solange kühlere Fremdluft beigemischt wird, bis die Zieltemperatur T_{z} des aufzuschmelzenden Granutates erreicht ist.

5. Verfahren nach Anspruch 3, **dadurch gekennzeichnet, dass** die aus dem Luftaustritt (6) austretende Luft das Granulat zur Energieübertragung solange umströmt bis die Zieltemperatur T_{z} des aufzuschmelzenden Granulates erreicht ist.

6. Extrusionslinie umfassend mindestens einen Extruder (1), ein Extrusionswerkzeug (2), eine Kalibrier- und Kühleinrichtung (3) und eine Trennvorrichtung (4), wobei zum Kühlen des Kunststoffprofils (9) eine Saugvorrichtung (8) vorgesehen ist, die über Saugleitungen (10) mit der Extrusionslinie verbunden ist, wobei in der Saugleitung zwischen der Saugvorrichtung (8) und der Extrusionslinie ein Elektrofilter (7) angeordnet ist.
